# FASCICULE DE BREVET EUROPEEN

(11) **EP 0 973 346 B1**
(45) Date de publication et mention de la délivrance du brevet: **13.11.2002**
(21) Numéro de dépôt: 99401638.4
(22) Date de dépôt: 01.07.1999
(51) Int. Cl.: H04Q 7/22, H04L 1/00

(54) **Procédé et dispositif de transmission de données sur un canal de paroles**
Verfahren und Vorrichtung zur Datenübertagung über einen Sprachkanal
Method and apparatus for transmission of data on a speech channel

(30) Priorité: 13.07.1998 FR 9808990
(43) Date de publication de la demande: 19.01.2000
(73) Titulaire: ALCATEL, 75008 Paris (FR)
(72) Inventeur: Bonnard, Pierre, 92150 Suresnes (FR); Varaldi, Jean, 92300 Levallos (FR)
(74) Mandataire: Lamoureux, Bernard

(56) Documents cités:
- EP-A- 0 564 697
- WO-A-98/12893
- WO-A-98/24253

## Description

La présente invention a pour objet un procédé et un dispositif de transmission de données sur un canal de parole notamment dans le domaine de la téléphonie mobile. Elle pourrait néanmoins être aussi utilisée dans le domaine des réseaux à postes téléphoniques fixes, dits réseaux commutés. Dans l'invention on résout les problèmes liés aux particularités de la transmission de données quand elle est effectuée dans un canal de parole et qu'elle y subit des transcodages correspondant à un codage de paroles dans un réseau.

Dans le domaine de la téléphonie mobile, on connaît les canaux de transmission de paroles et les canaux de transmission de données. Les canaux de transmission de données, nécessitent un codage différent du codage de la parole. Ils exploitent des équipements du réseau qui sont particuliers au mode de données. En pratique un abonnement spécifique doit être souscrit à cet effet auprès d'un opérateur de téléphonie mobile. On peut de cette façon avoir accès à une transmission de données, de point à point, en mode de commutation de circuits, à une vitesse de 9600 bits par secondes.

Dans le domaine de la téléphonie cellulaire GSM, on dispose par ailleurs de moyens de transmission de données exploitant des canaux de signalisation du système cellulaire. On distingue à cet effet des canaux dits SMS (Short Message Service) qui permettent de transmettre jusqu'à 300 bits par seconde, ou des canaux dits USSD (Unstructured Supplementary Service Data) destinés à acheminer des débits de l'ordre de 800 bits par seconde. Dans les deux cas, le débit est faible. Dans le cas USSD, les informations ne transitent que d'un utilisateur vers le réseau. Dans le cas des canaux SMS, les informations peuvent être échangées d'utilisateur à utilisateur, ou du réseau vers un utilisateur et sont facturées par paquets échangés, le coût actuel étant élevé.

Le but de l'invention est de permettre la transmission de données quelconques sur un réseau, notamment un réseau de téléphonie mobile, avec un débit élevé, sans pour autant devoir souscrire un abonnement supplémentaire. L'invention permet en particulier, de mettre en oeuvre des services d'accès à l'Internet. Elle permet également la mise à jour et la maintenance de terminaux par un constructeur.

Ce qui différencie le codage de la parole du codage des données, notamment pour la transmission en téléphonie mobile, est essentiellement la nature des informations numérisées représentatives de la parole. En effet la parole, si elle est numérisée simplement, produit des informations numériques pléthoriques. Pour éviter dans le cadre de la téléphonie mobile les encombrements en fréquence des canaux de transmission que de trop grands débits d'informations provoqueraient, il a été mis au point des codages de la parole de type particulier.

Ces codages particuliers, dits codages de source, consistent dans leur principe à rechercher des caractéristiques représentatives de la production de la parole par l'homme. Dans ces caractéristiques, on distingue trois grandeurs. Ces grandeurs sont :
- une fréquence fondamentale (dite pitch en littérature anglo-saxonne) correspondant à une vibration des cordes vocales ;
- un filtrage correspondant aux modifications de la vibration fondamentale et résultant de la propagation de la vibration dans le système phonatoire, c'est-à-dire le larynx, le pharynx et la bouche ;
- une excitation (ou erreur) correspondant à un résidu issu de la modélisation précédente appliquée aux paroles prononcées.

Un codeur de source de type GSM établit des meilleures valeurs de ces trois types de grandeurs à partir d'un signal PCM (Pulse Code Modulation). Un signal PCM est un signal échantillonné, dans un exemple à une fréquence de 8 000Hz et quantifié sur 13 bits, à partir du signal de parole. Le débit du signal PCM est donc de 104 Kbits/s dans cet exemple. Le codeur de source effectue une étape dite d'analyse ou codage de ce signal PCM.

Dans la suite de la description on utilisera l'exemple d'un réseau GSM et d'une transmission de la parole dans laquelle le codage de source est d'un type dit " Full rate " (recommandation ETSI SMG 6.10). Les principes de l'invention sont cependant applicables aux autres codages de source, ou formats de paroles, dans le réseau GSM (Half-rate, ou Adaptative Multi-rate). Ils sont également applicables aux autres réseaux de téléphonie mobile (DCS-1800, PCS, etc. ...).

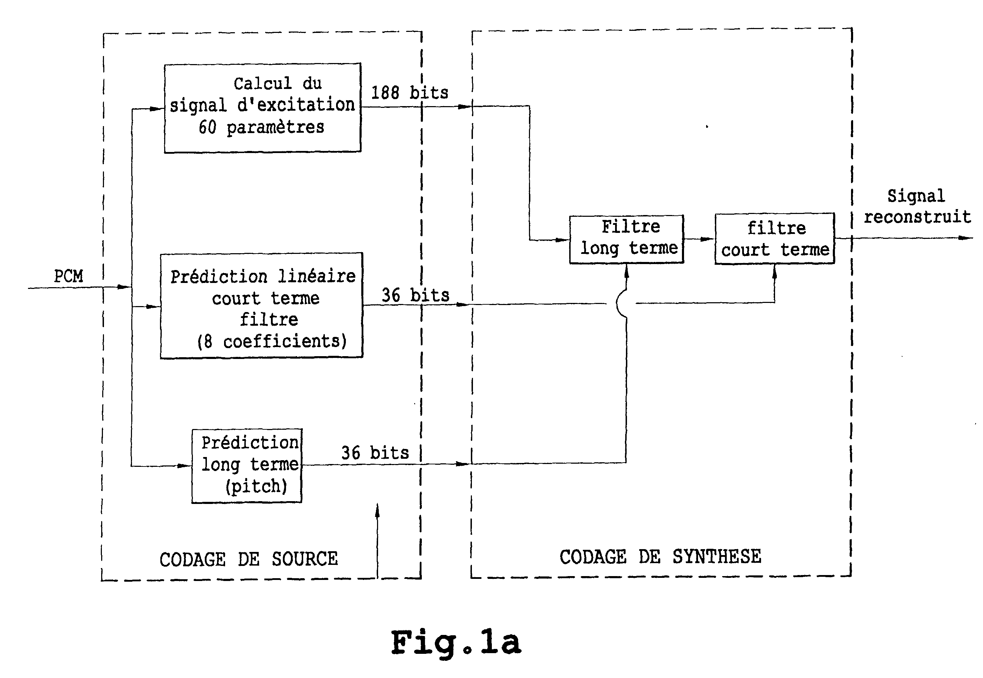

La figure 1a montre pour une trame de 20 ms d'un signal de parole, le codage de source du signal PCM qui lui correspond. Ce codage de source comporte dans un exemple l'élaboration de 36 bits d'un signal de pitch (correspondant à une prédiction à long terme), l'élaboration de 36 bits d'un signal de filtre et l'élaboration de 188 bits d'un signal d'excitation. Les 36 bits du signal de filtre correspondant à huit coefficients d'un filtre de prédiction linéaire à cour terme. Les 188 bits du signal d'excitation correspondent à 60 paramètres d'excitation.

En réception, un codeur effectuant une synthèse reçoit en correspondance des trains de 260 bits par période de 20 ms (avec donc un débit de 13 Kbits/s). Ce codeur de synthèse comporte deux filtres programmables en cascade. Un premier filtre à long terme reçoit les signaux d'excitation et les filtre avec des valeurs de filtrage correspondant aux 36 bits du signal de pitch. Un deuxième filtre, à court terme et connecté en aval du premier, filtre le signal résultant avec des valeurs de filtrage correspondant aux 36 bits du signal de filtre à court terme. Le signal reconstruit a, comme le signal PCM original, un débit de 104 Kbits/s.

Tout le traitement montré sur la figure la est effectué avec une cadence. La période de cette cadence est de 20 ms selon la norme actuellement en vigueur. A chaque période de cette cadence, un train de 260 bits doit être élaboré qui représente les paramètres des trois grandeurs. Dans la norme évoquée, pour 20 ms, il y a 260 bits à transmettre, ce qui correspond à un débit de 13 Kbits/s.

Le codage de source comporte la transformation d'une amplitude analogique (la valeur de l'onde de pression représentative du son) en trois types de grandeurs. La première grandeur représente la fréquence fondamentale ou pitch, on nomme couramment ce paramètre Long Term Prediction ou LTP. Cette première grandeur LTP est codée sur des sous-trames de 5 ms, soit quatre sous-trames en 20 ms. A chaque sous-trame 9 bits sont codés, soit un total de 36 bits par trame de 20 ms. La grandeur LTP de pitch et les 9 bits codés à chaque fois correspondent à deux composantes : un délai ou lag (codé sur 7 bits) définissant une taille de période de pitch ou retard du filtre de prédiction à long terme, et une amplitude (codée sur 2 bits) définissant un coefficient optimal du filtre de prédiction à long terme.

En ce qui concerne les huit coefficients du filtre à court terme, ils sont exprimés dans un système transformé appelé Log Area Ratio ou coefficients LAR : LAR1 à LAR8. Ces coefficients sont quantifiés avec des dynamiques variables selon leur importance ou leur énergie associée. Ainsi, deux premiers coefficients LAR1 et LAR2 du filtre à court terme sont quantifiés sur 6 bits. Deux coefficients suivants LAR3 et LAR4 sont affectés d'une dynamique de 5 bits. Deux suivants LAR5 et LAR6 sont affectés d'une dynamique de 4 bits et deux derniers LAR7 et LAR8 sont affectés d'une dynamique de 3 bits. En pratique, on attribue ainsi 36 bits à la représentation du filtre à court terme.

Dans les 260 bits transmis, les 188 bits restants (260-36-36) servent à coder les 60 paramètres de l'excitation ou RPE (Regular Pulse Excitation). L'excitation RPE est calculée comme le signal de pitch sur quatre sous-trames correspondant chacune à 40 échantillons (5ms). Les quatre excitations RPE ainsi calculées sont chacune décrites sous forme de grilles, régulièrement espacées, de pas trois à la fréquence d'échantillonnage initiale de 8kHz. On décrit chaque grille par 15 paramètres RPE qui sont :
- une position ou décalage de grille (RPE grid position) codée sur 2 bits ;
- une amplitude sur la sous-trame codée sur 6 bits ;
- et treize coefficients décrivant une amplitude relative de chaque pic de la grille (RPE pulses). Ces treize coefficients sont codés chacun sur 3 bits.

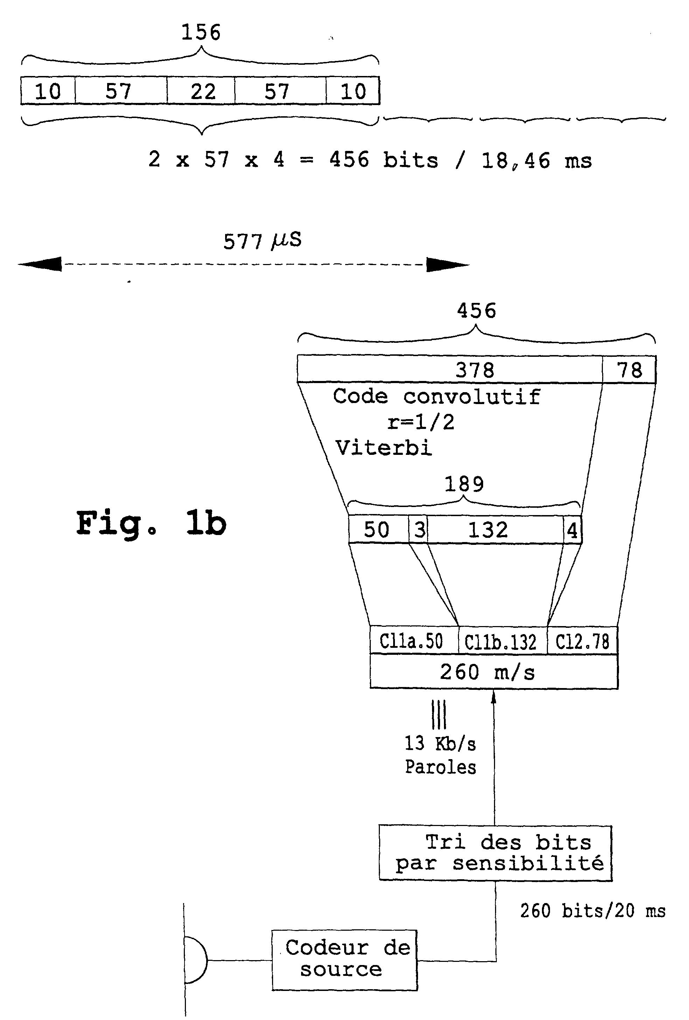

Lorsqu'un tel message numérique est ainsi codé, il subit en outre, au moment de la transmission réelle, un codage de canal pour être véhiculé par un canal hertzien sujet à un fort taux d'erreur de transmission. Le codage de canal appliqué à la téléphonie GSM se compose des étapes suivantes montrées sur la figure 1b. La première étape concerne un classement systématique des bits en trois catégories en fonction de leur sensibilité aux erreurs établie par la norme :
- classe la : 50 bits très sensibles
- classe lb : 132 bits sensibles
- classe II : 78 bits non sensibles

Cette classification est définie dans la recommandation GSM 5.03. La classe la contient essentiellement les bits de poids fort des divers paramètres. Les classes Ib et II contiennent les bits moins significatifs.

Une seconde étape comporte des protections des bits en fonction de leur classe de sensibilité. Cette protection est obtenue :
- pour la classe la, par ajout d'un code cyclique de détection des erreurs (CRC) de 3 bits (53 bits en sortie) ;
- pour la classe la protégée et la classe Ib, ensemble, on ajoute 4 bits de traînée. Soit 189 bits en sortie. On applique en outre à cet ensemble de 189 bits un code correcteur convolutif de rapport 1/2, ce qui donne 378 bits en sortie ;
- pour le résultat précédant et les bits de la classe II, soit 456 bits au total, pas de protection supplémentaire.

Le total obtenu des 456 bits, sur 20 millisecondes, est alors réparti pour la transmission, dans un exemple, dans quatre trames successives. Chaque trame de transmission comporte, notamment dans le système GSM de type TDMA, des fenêtres temporelles de 577 microsecondes au cours desquels à chaque fois sont envoyés 156 bits. Les messages de 156 bits comportent au début et à la fin du message 10 bits non significatifs, servant notamment à la synchronisation. Ces 10 bits sont essentiellement utilisés pour permettre la mise à niveau de la puissance d'émission de l'émetteur de téléphonie mobile, pour éviter que cette puissance ne soit appliquée trop brutalement et provoque des distorsions par effet percutionnel.

Puis deux trains d'informations de 57 bits sont envoyés : ils sont représentatifs du message à transmettre. Ils sont placés de part et d'autre d'un message de 22 bits relatif à l'identité du téléphone mobile, de la communication, ou de l'interlocuteur origine du message. En définitive, pour une trame, dans une fenêtre temporelle donnée, on envoie ainsi deux fois 57 bits utiles représentatifs du message. Le message étant envoyé sur quatre trames successives, on envoie bien 2 x 57 x 4 = 456 bits en quatre trames, et cela pour une durée de 18,46 millisecondes. Ce qui signifie que le débit du canal est supérieur, un peu, au débit du codeur de source de façon à ce que le message numérique puisse être entièrement transmis.

Plutôt que d'adopter un codage de type TDMA on pourrait adopter un codage de type CDMA ou une autre interface radioélectrique de système cellulaire (ou non) du moment que le débit du système est supérieur au débit du codeur de parole.

A la réception, le message numérique reçu subit un décodage de canal correspondant à ce codage de canal et fournit, au rythme de 260 bits toutes les 20 millisecondes, les trois types d'informations numériques évoquées ci-dessus, plus l'indication d'éventuelles erreurs résiduelles sur les bits de la classe la.

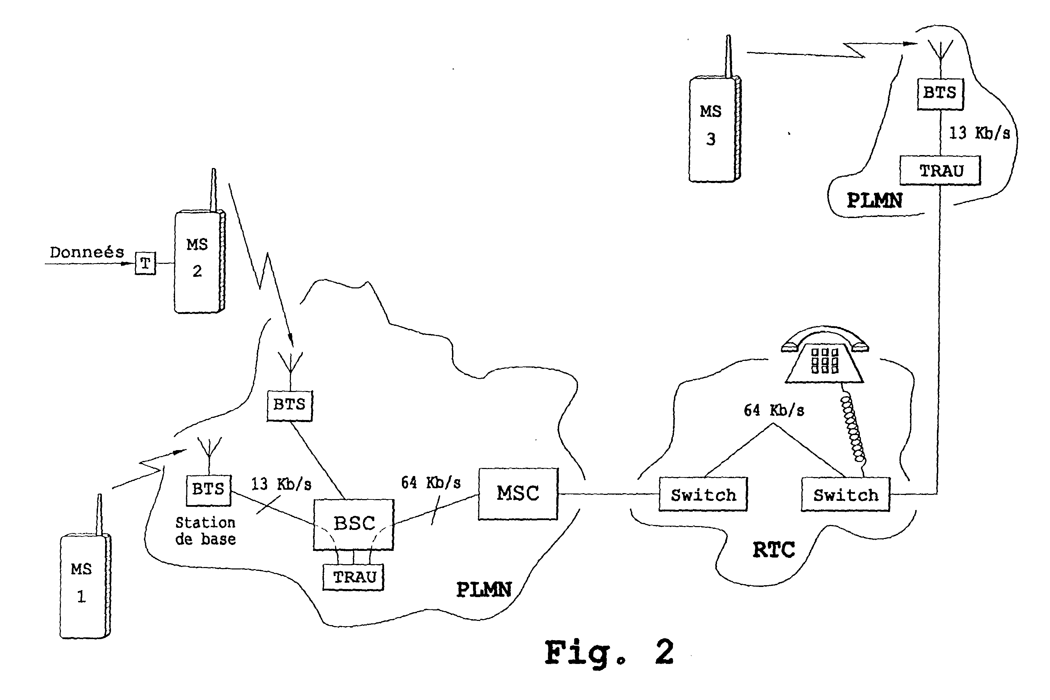

La figure 2 montre que les informations de parole, codées et protégées, sont ensuite transmises par un téléphone mobile MS1 à un réseau de téléphonie mobile PLMN (Public Land Mobile Network). Le réseau PLMN effectue le décodage de canal de ces informations de paroles dans des stations de base BTS (Base Transceiver Station), et produit des données au format de paroles GSM. C'est-à-dire comme si elles sortaient d'un codeur de source. Puis le réseau PLMN transcode les données au format de paroles GSM en des données en un format communément utilisé dans les réseaux téléphoniques à commutation de circuit. Ce dernier format dit PCM loi-A conduit à un débit de 64kbits/s correspondant à 8000 échantillons par seconde codés sur 8 bits. Ce transcodage est effectué par un équipement du réseau PLMN dit TRAU (Transcoder Rate Adaptation Unit) généralement situé à l'endroit de circuits dits MSC (Mobile services Switching Centers) de ce réseau.

Le transcodage TRAU consiste à effectuer la synthèse de la parole par un décodeur équivalent au processus inverse du codeur de source décrit plus haut. On obtient alors un signal de parole en représentation PCM (Pulse Code modulation) formé de 8000 échantillons par secondes codés sur 13 bits, comme le signal original, auquel on applique une transformation logarithmique dite Loi-A qui code chaque échantillon sur 8 bits (soit 64kbit/s). Cette nouvelle forme du signal de parole contient toutes les informations physiques du signal précédent au format GSM, aux erreurs de transmission et de transcodage près. Ce signal au format PCM loi A est transmis à un réseau commuté RTC, notamment filaire.

Dans ce réseau commuté RTC, ce signal à 64 Kbits par seconde est soit transformé en un signal analogique soit transmis dans des circuits numériques. Puis il est acheminé jusqu'à un destinataire sur ce réseau commuté. Ou bien il est acheminé jusqu'à un autre équipement de type TRAU si le destinataire est lui aussi localisé sur un réseau cellulaire de téléphonie mobile. Cet autre équipement TRAU effectue une transformation inverse du premier équipement TRAU, et est dit ici TRAU inverse, pour le remettre au débit et au format GSM.

On voit sur la figure 2, que le signal de parole initial au format GSM à 13 Kbits/s peut ainsi subir plusieurs transcodages TRAU ou inverse. Chaque étape de transcodage et de transmission est susceptible de dégrader le contenu de ce signal. En particulier, si on souhaite rétablir le format GSM à 13kbit/s en bout de chaîne de réception, la parole audible sera très proche de celle en bout de chaîne d'émission mais les valeurs des paramètres du modèle (LTP, LAR, RPE) peuvent être sensiblement différentes.

Quand on veut utiliser un canal de parole pour transmettre des données, il n'est donc pas possible de remplacer simplement les bits descriptifs de ces paramètres au niveau de l'émetteur par les données à transmettre'pour pouvoir les récupérer au niveau du récepteur. En effet, en agissant ainsi, des erreurs apparaîtraient en bout de chaîne. De plus les transcodeurs sont bien adaptés à la manipulation de paramètres typiques de la parole humaine. Si on remplace les bits descriptifs de ces paramètres par des données brutes, on obtient des configurations de bits a priori aléatoires. Il est possible alors que les circuits d'analyse et de synthèse ne sachent pas reproduire ces configurations. Par exemple c'est le cas si ces configurations de bits représentent des variations brutales de l'énergie des blocs ou de la valeur du pitch. Cet état de la technique est décrit dans le document EP 564 697.

L'invention a pour objet de remédier aux inconvénients cités, en plaçant des bits de données à transmettre dans les 260 bits du format de parole GSM. Le principe de l'invention est de satisfaire à certaines contraintes. Ces contraintes sont :
- Contrainte 1 : il est nécessaire d'exploiter au mieux les bits les plus protégés par le codage canal ;
- Contrainte 2 : il est nécessaire d'éviter d'introduire des configurations ou variations incompatibles avec le bon fonctionnement des équipements de transcodage TRAU existants ;
- Contrainte 3 : il est nécessaire de ne pas placer d'information dans des bits non surs au regard des phénomènes de transcodage et transmission.

Dans l'invention on continuera à utiliser les circuits en place dans les réseaux PLMN et RTC pour la transmission de parole. En effet, les opérateurs de téléphonie mobile et de réseau commuté ne doivent pas avoir à changer leurs équipements. Dans l'invention on utilisera néanmoins les canaux de paroles pour transmettre des données, notamment avec un débit plus élevé que celui dont sont capables les canaux de signalisation et à un coût moindre des canaux de données.

En pratique, avec les mots de 260 bits évoqués, on peut avoir affaire à 2²⁶⁰ configurations binaires distinctes. Parmi toutes ces configurations, certaines, selon l'invention, ne seront pas récupérables au niveau de l'équipement distant. Selon l'invention on en élimine un grand nombre. Les configurations de bits éliminées sont en rapport avec :
- la contrainte 1 : Dans ce cas les bits de la classe Il ne sont pas utilisés ;
- la contrainte 2 : Dans ce cas les variations importantes en amplitude des valeurs de pitch ou d'énergie des trames sont exclues ;
- la contrainte 3 : Les bits de poids faible des paramètres du codeur de source ainsi que les paramètres dépendant des premières étapes d'analyse (RPE) ne sont pas utilisés. En effet, les valeurs analysées pour l'excitation RPE dépendent beaucoup des étapes de filtrage long terme et court terme. Ainsi, si ces deux filtres ont subit des modifications lors de la transmission ou du transcodage, les nouveaux paramètres RPE peuvent êtres très différents des valeurs initiales. On verra qu'il est toutefois possible de conserver certaines grandeurs ainsi qu'une allure globale des grilles RPE tout au long de la transmission. On citera par exemple la valeur d'amplitude maximale du bloc ainsi qu'un ensemble de configuration des grilles issues d'une sous-quantification de l'univers des valeurs possible "grid-position"-"RPE pulses".

Aussi dans l'invention, on recense les configurations de bits parmi les 260 bits de la trame de 20ms qui sont interprétées au mieux dans les étapes de transcodage et transmission. Ces configurations sont des configurations autorisées. Elles sont dites configurations robustes. Les configurations robustes ne sont pas pour autant figées. En effet, un aspect dynamique est introduit par la contrainte 2. Les autres configurations sont des configurations interdites.

Dans l'invention, on va retenir un nombre de configurations robustes bien plus faible que 2²⁶⁰. Dans un exemple on en retient 2⁶⁴. On constitue alors un système de transcodage proche d'une fonction MODEM qui transcode chaque mot des données à transmettre en des configurations robustes. Ce transcodage a pour effet de transcoder des mots de données de 64 bits à transmettre en des mots de 260 bits au format de parole GSM. Dans ces mots de 260 bits, seuls 64 bits repérés exactement par leur position peuvent avoir une valeur qui est significative du message à transmettre. Les autres bits, les 196 bits restant, auront des valeurs figées, indépendantes des données à transmettre. Ces valeurs figées peuvent être un ou zéro en fonction de la robustesse la meilleure.

Dans l'invention, on remplace alors le codeur de source par un transcodeur spécifique. Les configurations robustes de bits transmises sont alors interprétées correctement par les circuits TRAU inverses et véhiculées normalement sur le réseau fixe RTC. A la réception, dans le cas d'un équipement terminal filaire, on synthétise à nouveau avec un circuit TRAU, à partir des données véhiculées à 64 Kbits par seconde des messages robustes, véhiculés à 13 Kbits par seconde au format de parole GSM. Puis on utilise un système de transcodage inverse du transcodeur spécifique pour restituer les données transmises. Dans le cas d'un équipement terminal GSM seule l'étape de transcodage inverse est nécessaire puisque la transformation UART aura déjà été entreprise par un réseau PLMN.

L'invention ne nécessite donc, en plus des équipements classiques des réseaux traversés, qu'un transcodeur spécifique qui se substitue au codeur de source à l'émission et, à la réception, un transcodeur spécifique inverse du précédent.

L'invention a donc pour objet un procédé de transmission de données sur un canal de parole, notamment de téléphonie mobile, caractérisé en ce que
- on repère dans un schéma de formatage de trames de parole des configurations de trains binaires qui correspondent à des configurations interdites, sans robustesse,
- on transcode les données à transmettre en des données au format de la transmission de paroles, en ne retenant que des configurations de bits différentes des configurations interdites,
- on transmet ces données transcodées sur un réseau, notamment un réseau de téléphonie mobile,
- et on les décode en correspondance en réception.

L'invention a également pour objet un dispositif de transmission de données sur un canal de paroles, notamment de téléphonie mobile, caractérisé en ce qu'il comporte
- un circuit transcodeur pour transcoder un bloc de bits à transmettre disponible en un format de bloc, en un message de bits formaté en un format de transmission de paroles, le format de bloc comportant un nombre de bits inférieur au nombre de bits du format de transmission de paroles, et
- un commutateur pour substituer, dans la transmission, le message de bits à transmettre formaté en un format de transmission de paroles à un message délivré par un codeur de source de paroles.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figures 1a et 1b : déjà commentées, la représentation des étapes d'analyse et de synthèse de la parole dans le cas d'un codeur de source GSM de type full-rate tel qu'on le trouve dans les terminaux GSM ou les équipements TRAU, et le formatage des paramètres issus de ce codeur de source et leur protection préalable à l'émission sur un réseau de téléphonie mobile bruité ;
- Figure 2 : déjà commentée, une représentation schématique du réseau GSM et des différentes étapes de transcodage rencontrées ;
- Figure 3: une représentation schématique d'un exemple des moyens de mise en oeuvre du procédé de l'invention.

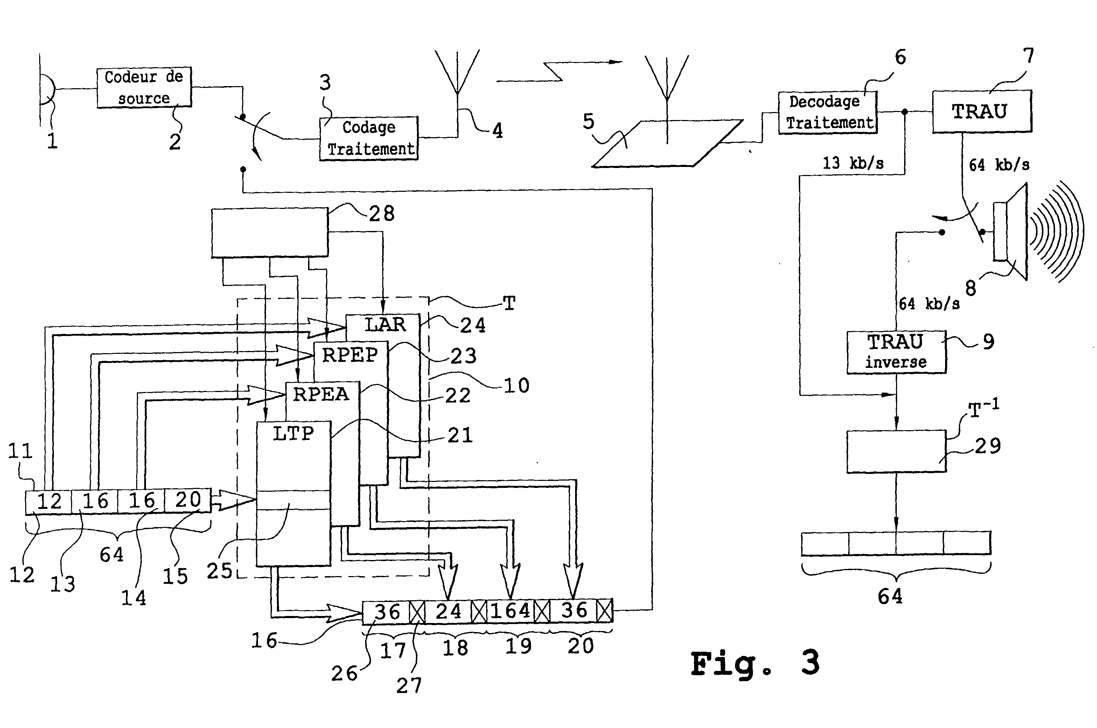

La figure 3 montre une chaîne d'émission réception utilisée en téléphonie mobile pour transmettre des messages de paroles. Par exemple un microphone 1 reçoit les paroles prononcées d'un locuteur. Ces paroles sont codées, conformément à ce qui a été indiqué précédemment, par un codeur de source 2. Avant d'être transmises, les informations numérisées disponibles à la sortie du codeur de source 2 sont traitées par un circuit 3 de codage de canal. Elles sont ensuite émises par un émetteur 4. Une station de base 5, en relation hertzienne avec l'émetteur 4, capte les signaux émis, et les décode dans un circuit 6 de décodage de canal. Selon ce qui a été évoqué précédemment, la station de base 5 peut être en relation avec les circuits d'un opérateur de téléphonie gérant un réseau commuté.

Dans ce cas cet opérateur adapte, dans un circuit TRAU 7, le débit des informations distribuées par le circuit de décodage 6 avant de les acheminer vers l'interlocuteur qui est destiné à les écouter. Cet interlocuteur dispose notamment d'un ensemble de circuits et des moyens de convertir les informations numérisées en ondes sonores. Cet ensemble de circuits et ces moyens sont représentés schématiquement par un haut-parleur 8.

Eventuellement, l'auditeur est lui-même connecté à un réseau de téléphonie mobile, auquel cas l'opérateur de téléphonie fixe reconvertira les données formatées à grand débit en des données formatées à plus faible débit utilisable pour l'opérateur de téléphonie mobile. Cette reconversion est effectuée dans un circuit 9 inverse (UART) du circuit 7. Ceci signifie que les circuits 9 sont connus de l'état de la technique.

Dans l'invention, on va utiliser un circuit de transcodage 10 qui effectue une fonction de transcodage T. Le circuit 10 reçoit périodiquement en entrée des mots 11 en un format de blocs donné. Dans un mot 11 il y a ainsi, dans un exemple, quatre blocs 12 à 15 comprenant respectivement 12, 16, 16 et 20 bits, soit au total 64 bits dans le mot 11. Périodiquement, le circuit 10 émet en sortie des mots 16 en un format différent.

Ce format différent est le format de la transmission de la parole, notamment celui de la parole en téléphonie mobile, tel que le codeur de source 2 les produirait. La différence s'exprime dans le fait que les mots 16 sont plus longs que les mots 11. Une particularité essentielle de l'invention est que, dans le format de transmission de paroles retenu, certaines configurations sont interdites. Ceci conduit à ce que des mots 11 de données à transmettre aient obligatoirement une longueur plus courte que des mots 16 effectivement transmis au format de la transmission de la parole.

Dans l'exemple schématiquement représenté, les mots 16 ont ainsi une longueur de 260 bits. Ils sont répartis en blocs 17 à 20 ayant respectivement des tailles de 36, 24, 164 et 36 bits. La périodicité de leur émission est de 20 millisecondes, et correspond à quatre trames de la transmission de téléphonie mobile entre l'émetteur 4 et la station de base 5 . Ces mots 16 comportent une première partie 17 codée sur 36 bits et représentative du pitch, une deuxième partie 18 codée sur 24 bits et représentative du paramètre amplitude du signal RPE, une troisième partie 19 codée sur 164 bits représentative de la grille d'excitation RPE, et enfin une quatrième partie 20 codée sur 36 bits et représentative des coefficients LAR du filtrage à court terme.

Selon l'invention, dans les 260 bits ainsi envoyés, et correspondant à 2²⁶⁰ configurations possibles, on va éliminer des configurations interdites. On utilise la notation suivante B7, B6, 85, B4, B3, B2, B1, B0 pour désigner les bits composant un mot de 8 bits par poids décroissant.

Par sous-trame de 5 ms du signal au format de paroles, on utilise les configurations suivantes.

Pour la partie LTP de ce signal, codée sur 9 bits,
- on utilise pour LTP-lag : B6, B5, B4, B3 soit quatre bits sur sept (donc B2, B1 et B0 ont une valeur figée, par exemple 0) ;
- on utilise pour LTP-gain : B1 soit un bit sur deux (donc B0 a une valeur figée) ;

Pour la partie RPE de ce signal, codée au total sur 47 bits,
- on utilise pour l'amplitude du bloc codée sur six bits : B5, B4, B3, B2 soit quatre bits sur six (donc B1 et B0 sont figés) ;
- on utilise pour la position de grille, codée sur deux bits, aucun bit retenu soit zéro bits sur deux (donc B1 et B0 sont figés) ;
- on utilise pour RPE Pulses quatre bits sur les 13 x 3 (B2, B1, B0) = 39 bits disponibles et correspondant aux 13 coefficients. Les quatre bits utilisés permettent de définir seize configurations très distinctes les unes des autres. Elles sont choisies par un maillage par maximisation d'une distance euclidienne parmi les treize coefficients codés.

En définitive, par sous-trame de 5 ms on utilise donc 4 + 1 = 5 bits du signal LTP, et 4 + 4 = 8 bits du signal RPE. Ce total de 13 bits utilisés par sous-trame de 5 ms, conduit donc à 52 bits utilisés par trame de 20 ms. Par comparaison, pour une trame de 20 ms, 36 bits sont normalement affectés à la partie LTP du signal et 188 à la partie RPE de ce signal.

Ensuite, par trame de 20ms du signal au format de paroles, on utilise les configurations suivantes pour la partie LAR de ce signal codée sur 36 bits :
- on utilise pour :
   LAR1 et LAR2: B5, B4, B3 soit deux fois trois bits sur deux fois six bits possibles ;
   LAR3 et LAR4: 84, 83 soit deux fois deux bits sur deux fois cinq bits possibles ;
   LAR5 et LAR6: B3 soit deux fois un bit sur deux fois quatre bits possibles
   LAR7 et LAR8 : aucun bit sur deux fois trois bits possibles.

Dans les huit cas, B2, B1 et B0 sont figés. On utilise donc au total , de ce fait, 12 bits par trame de 20ms au lieu des 36 bits disponibles.

Au total on exploite donc 52+12=64 bits par trame de 20ms. On obtient en conséquence un débit d'information de 3200 bits par seconde.

Autrement dit, en neutralisant ainsi 196 bits, on passe de 2²⁶⁰ configurations possibles pour les mots 16 à 2⁶⁴ configurations différentes disponibles pour coder les mots 11. Pour ces 2⁶⁴ configurations différentes des mots 16, à chaque fois les bits imposés ont comme valeur les 1, ou les 0, indiqués ci-dessus. Ceci revient à constituer des arrangements, préférentiels, de 64 bits parmi 260. Dans ces arrangements bien entendu, à la place des bits qui sont représentatifs des données à transmettre, la valeur est libre, de même qu'est figée la valeur de ceux situés à la place des bits qui doivent toujours avoir une valeur déterminée, indépendante de la valeur des données à transmettre.

La fonction de transcodage T de la table 10 peut consister à adresser une table de transcodage avec un mot 11 de 64 bits. On peut ainsi préférer réaliser le circuit 10 sous la forme de quatre tables 21 à 24, en mémoires non volatiles (EEPROM ou EPROM), adressables chacune par des mots de longueur adéquate. A chaque enregistrement 25 lu dans chacune des quatre tables 21 à 24 du circuit 10, on peut prélever un bloc de bits voulus pour constituer le mot 16.

On peut ensuite concaténer ces blocs suivant la syntaxe du train binaire de la norme pour constituer, périodiquement, des messages de 260 bits. Dans les messages de 260 bits ainsi constitués, on trouvera des parties dont les bits ne sont pas représentatifs d'informations à transmettre mais déterminés de manière à respecter le critère de continuité des paramètres.

Ainsi, la partie 15 du mot 11, comportant 20 bits permettra d'adresser quatre fois, avec cinq bits à chaque fois, la table 21 qui effectue le codage (fictif) LPE. Pour cinq bits d'adresse, la table 21 délivre des mots de neuf bits. Lue quatre fois dans le temps d'une trame de parole, elle délivre les 4 x 9 = 36 bits du bloc 17 du mot 16. Une partie 26 du bloc 17 représente les informations à transmettre. Une partie 27 de ce bloc 17 représente les bits à valeurs figées. Sont ainsi interdites, comme non robustes, toutes les configurations du mot 16 dans lesquelles les bits des parties 27 ont des valeurs différentes des valeurs figées. Les parties avec un même caractère figé dans le mots 16 sont à chaque fois représentées par une croix, montrant par là que ces bits ne sont pas disponibles pour représenter de l'information. La partie 14 du mot 11 comporte 16 bits. Cette partie est aussi exploitée en quatre fois, au rythme des sous-trames pour lire la table 22 avec des adresses de 4 bits. La table 22, correspondant (fictivement) au codage d'amplitude, LPE Amplitude, délivre alors quatre fois des mots de 6 bits. La partie 18 dû mot 16 est ainsi obtenue par concaténation de quatre fois six bits. La partie 13 du mot 11 comporte également 16 bits. Selon ce qui a été évoqué précédemment, elle est lue en quatre fois pour adresser, quatre fois au cours d'une trame du signal de parole, la table 23. La table 23 transcode ainsi à chaque fois quatre bits d'adresse en 41 bits. De ces 41 bits 39 bits correspondent à la partie RPE P (pulse) du signal de parole et 2 bits correspondent à la position du grille. Ces deux derniers bits sont toujours figés. Dans les 39 bits, seuls quatre sont à des positions représentatives d'informations à transmettre.

Enfin, la partie 12 du mot 11 comporte 12 bits. Elle permet d'adresser, en une fois par trame, la table 24 et produire en correspondance des mots de 36 bits (partie 20) du mot 16. Les mots des tables 21, 22, 23 et 24 ont donc des longueurs respectivement de 9, 6, 41 et 36 bits. Les tables 21, 22, 23 étant lues quatre fois pendant que la table 24 est lue une fois, le débit du circuit 10 est donc de 4 x (9 + 6 + 41) + 36 = 260 bits par trame de 20 ms.

Cette détermination dynamique des mots complets effectivement envoyés sur le réseau est à la charge d'un circuit 28 de contrôle. Le circuit 28 qui compte un microprocesseur et un séquenceur peut aussi être chargé, entre autres, de vérifier les contraintes de continuité relative des grandeurs entre trames et sous-trames et correspondant au transcodage des mots 11 en mots 16. Il est par ailleurs possible de remplacer les mémoires 21 à 24 par un logiciel imposant, avec le concours du microprocesseur 28, dans le mot 16, aux positions des bits libres, des valeurs de bits correspondant au mot 11, et aux autres positions des valeurs figées. Ces valeurs figées peuvent par ailleurs être définies à l'avance ou modifiées en fonction des valeurs des bits aux positions libres.

Lorsqu'on veut envoyer des données avec le procédé de l'invention, à l'émission on provoquera une commutation de manière à ce que le circuit 3 de codage de canal se connecte au circuit 10 au lieu de se connecter au codeur de source 2. Cette commutation peut être automatique et en relation avec une étape préalable de négociation du mode de transfert entre les terminaux en communication. Elle peut par exemple résulter d'une étape de signalisation sur une communication de parole ou signalisation "in-band".

En réception, un circuit de réception mettant en oeuvre le procédé de l'invention, s'il est ou non connecté à un réseau de téléphonie fixe commuté, devra ou non comporter un circuit 9 de type connu effectuant l'inverse de la fonction connue 7. A la sortie d'un tel circuit 9, après la cascade des circuits 6 7 et 9, le débit est ainsi replacé à 13 Kbits/s et le formatage est celui du codage de source. On distingue en effet les cas de communication mobile a filaire ou mobile à mobile. En cascade avec un tel circuit TRAU inverse 9, ou respectivement directement en cascade avec un circuit 6 de décodage de canal dans le cas d'une relation mobile à mobile, on disposera un circuit 29 effectuant un décodage, avec une fonction inverse T⁻¹ de la fonction de codage T effectué par le circuit 10. Le circuit 29 pourra également comporter des tables. La commutation de parole en données à la réception pourra tout simplement être imposée par la nature des équipements mis en place du côté réception ou par l'étape de négociation citée ci-dessus.

Si en réception l'appareil est un appareil de téléphonie mobile, il recevra directement des messages au format de la transmission en téléphonie mobile (à 260 bits par mot toutes les 20 ms). Dans ce cas, au décodage, le circuit 9 n'a pas besoin d'être présent puisque sa fonction aura été mise en oeuvre (le cas échéant seulement) par l'opérateur de téléphonie fixe.

En résumé, les téléphones mobiles munis des moyens de mettre en oeuvre le procédé de l'invention comportent le circuit 10 pour l'émission et le circuit 29 pour la réception. Ces deux circuits sont administrés par le microprocesseur 28. En poste fixe, relié à un réseau de téléphonie commuté, les équipement utiles pour mettre en oeuvre le procédé de l'invention doivent comporter en réception un circuit 9 et un circuit 29.

En émission de données sur un canal de paroles, à partir d'un poste relié à un réseau commuté, et à destination d'un téléphone mobile, l'appareil émetteur devra comporter un circuit 10 et un circuit 28. L'opérateur de téléphonie mobile effectue de son coté, pour la transmission hertzienne la conversion de débit avec un circuit 7 et un circuit 9. En réception la présence du circuit 29 sera seule requise dans le téléphone mobile.

Avec l'exemple évoqué, on peut transmettre 64 bits par période de 20 ms. Ceci conduit à un débit de 3200 bits/s.

Il est possible d'adopter par ailleurs une démarche empirique pour impliquer plus de bits que les 64 bits comme candidats à la constitution des configurations robustes. Par exemple on peut envisager 100 bits ou plus. Une telle démarche empirique, liée à chaque type de codeur de source (et de circuit TRAU qui lui correspond), sera de préférence menée à l'aide de tables 21 à 24 programmables. Une fois que la vraie définition de la fonction T aura été trouvée, un circuit de concaténation spécifique peut être réalisé en mettant en service le microprocesseur 28 et un logiciel de concaténation approprié.

Finalement, dans un téléphone mobile, ou lors de la transmission d'un signal de parole dans le réseau, un phénomène d'écho peut apparaître. Il est connu de valider une fonction dite d'annulation d'écho pour atténuer ce phénomène. Cette fonction a pour effet de modifier le signal émis. Dans le cas où les paramètres de la parole codée sont remplacés par des données aléatoires, on risque d'altérer le contenu du message. Il est donc nécessaire de dévalider les fonctions d'annulation d'écho pour appliquer l'invention. Pour des mêmes raisons, des fonctions de détection d'activité vocale qui ont pour but de transmettre uniquement un bruit de confort lorsque le locuteur ne parle pas, doivent être désactivées quand on met en oeuvre l'invention.

## Revendications

1. Procédé de transmission de données entre deux terminaux de télécommunications sur un canal de parole, notamment de téléphonie mobile, au travers d'un réseau télécommunications comprenant des équipements de transcodage, dits TRAU, des signaux de paroles, les signaux de paroles échangés entre lesdits terminaux étant codés et décodés dans chaque terminal suivant un schéma prédéterminé de codage de la parole, **caractérisé en ce que**
- on repère dans ce schéma de codage de la parole des configurations de trains binaires qui correspondent à des configurations robustes, compatibles avec les équipements de transcodage TRAU du réseau de télécommunications,
- on transcode les données à transmettre en des données au format de la transmission de paroles, en ne retenant que lesdites configurations robustes (26, 27),
- on transmet (4, 5) ces données transcodées sur un réseau, notamment un réseau de téléphonie mobile,
- et on les décode (29) en correspondance en réception.

2. Procédé selon la revendication 1, **caractérisé en ce que**
- on adapte (7) le débit et ou le format de transmission de téléphonie mobile à un débit et ou à un format de transmission en téléphonie sur réseau commuté, et après transmission sur ce réseau commuté,
- pour décoder, on adapte (9) le débit et ou le format en inverse, et
- on effectue un transcodage (29) inverse.

3. Procédé selon l'une des revendications 1 à 2, **caractérisé en ce que**
- on transcode en affectant à un message (16) de données transmis selon un format de téléphonie mobile, des bits (27) dont la valeur est déterminée en fonction de leur place dans le message transmis.

4. Procédé selon l'une des revendications 1 à 3, **caractérisé en ce que** le schéma de codage de la parole est un codage de source comportant, pour des paroles prononcées, un codage de fréquence fondamentale, un codage de filtre et un codage d'excitation.

5. Procédé selon l'une des revendications 1 à 4, **caractérisé en ce que**
- pour transcoder, on utilise une table de transcodage.

6. Procédé selon l'une des revendications 1 à 5, **caractérisé en ce que**
- pour transcoder, on effectue une concaténation de bits de données (12-15) à transmettre avec des bits (27) de valeurs imposées, de manière à produire un message à transmettre, à un format (17-20) de sortie de codeur de source, qui comporte un nombre différent (260) de bits qu'un format (64) des bits des données à transmettre.

7. Dispositif de transmission de données entre deux terminaux de télécommunications sur un canal de parole, notamment de téléphonie mobile, au travers d'un réseau de télécommunications comprenant des équipements de transcodage des signaux de paroles, **caractérisé en ce qu'**il comporte
- un circuit transcodeur (10) pour transcoder les données à transmettre en des données au format de la transmission de paroles, en ne retenant que des configurations robustes (26, 27) du schéma de codage de la parole, qui sont compatibles avec les équipements de transcodage TRAU du réseau de télécommunications, et
- un commutateur pour substituer, dans la transmission, le message de bits à transmettre formaté en un format de transmission de paroles à un message délivré par un codeur de source de paroles.

8. Dispositif selon la revendication 7, **caractérisé en ce que** le circuit transcodeur est adapté pour transcoder un bloc (11) de bits à transmettre disponible en un format de bloc, en un message de bits (16) formaté en un format (260) de transmission de paroles, le format de bloc comportant un nombre de bits inférieur (64) au nombre de bits du format de transmission de paroles.

9. Dispositif selon la revendication 7 ou 8, **caractérisé en ce qu'**il comporte une table (21-24) dans le circuit de transcodage.

10. Dispositif selon l'une quelconque des revendications 7 à 9, **caractérisé en ce que** le circuit de transcodage comporte un circuit (28) de concaténation des bits du bloc de bits à transmettre avec des bits (27) de valeur figées pour former le message de bits formaté au format de transmission de paroles.

11. Dispositif selon l'une des revendications 7 à 10, **caractérisé en ce qu'**il comporte, en réception, un circuit (9) d'adaptation de format de parole en cascade avec un circuit (29) de transcodage inverse (T⁻¹).

## Patentansprüche

1. Verfahren zur Übertragung von Daten zwischen zwei Fernmeldeendgeräten auf einem Sprachkanal, insbesondere der Mobiltelefonie, über ein Fernmeldenetz mit Codewandlereinheiten, sogenannten TRAUs, für Sprachsignale, wobei die zwischen den Endgeräten ausgetauschten Sprachsignale in jedem Endgerät nach einem vorgegebenen Sprachcodierschema kodiert und dekodiert werden, **dadurch gekennzeichnet, dass**
- in dem Sprachcodierschema Konfigurationen von binären Folgen ermittelt werden, die robusten, mit den Codewandlereinrichtungen TRAU des Fernmeldenetzes kompatiblen Konfigurationen entsprechen, die zu übertragenden Daten in Daten im Format der
- Sprachübertragung unter Beibehaltung nur der robusten Konfigurationen (26, 27) codegewandelt, die codegewandelten Daten auf einem Netz, insbesondere
- einem Mobiltelefonienetz, übertragen werden (4,5), und sie entsprechend beim Empfang decodiert werden (29).

2. Verfahren nach Anspruch 1, **dadurch gekennzeichnet, dass**
- die Art und/oder das Format der Übertragung der Mobiltelefonie an eine Rate und/oder ein Format der Übertragung der Festnetztelefonie angepasst werden (7) und nach Übertragung auf dem Festnetz
- zum Decodieren die Rate und/oder das Format entgegengesetzt angepasst wird/werden (9) und
- eine entgegengesetzte Codewandlung (29) durchgeführt wird.

3. Verfahren nach einem der Ansprüche 1 bis 2, **dadurch gekennzeichnet, dass** codegewandelt wird, indem einer Nachricht (16) aus nach einem Mobiltelefonieformat übertragenen Daten Bits (27) zugeordnet werden, deren Wert in Abhängigkeit von ihrem Ort in der übertragenen Nachricht festgelegt ist.

4. Verfahren nach einem der Ansprüche 1 bis 3, **dadurch gekennzeichnet, dass** das Sprachcodierschema eine Quellcodierung ist, die für ausgesprochene Wörter eine Grundfrequenzcodierung, eine Filtercodierung und eine Erregungscodierung umfasst.

5. Verfahren nach einem der Ansprüche 1 bis 4, **dadurch gekennzeichnet, dass** zum Codewandeln eine Codewandeltabelle verwendet wird.

6. Verfahren nach einem der Ansprüche 1 bis 5, **dadurch gekennzeichnet, dass**
zum Codewandeln eine Verkettung von zu übertragenden Daten (12 - 15) mit Bits (27) mit vorgegebenen Werten durchgeführt wird, um eine zu übertragende Nachricht in einem Quellcodierer-Ausgangsformat (17 - 20) zu erhalten, die eine andere Zahl (260) von Bits als ein Format (64) der zu übertragenden Datenbits umfasst.

7. Vorrichtung zur Übertragung von Daten zwischen zwei Fernmeldeendgeräten auf einen Sprachkanal, insbesondere der Mobiltelefonie, über ein Fernmeldenetz mit Sprachsignal-Codewandlereinrichtungen, **dadurch gekennzeichnet, dass** sie umfasst
- eine Codewandlerschaltung (10) zum Codewandeln der zu übertragenden Daten in Daten im Format der Sprachübertragung unter Verwendung nur der robusten Konfigurationen (26, 27) des Sprachcodierschemas, die mit den Codewandlereinrichtungen TRAU des Fernmeldenetzes kompatibel sind und
- einen Umschalter zum Ersetzen der in einem Sprachübertragungsformat formatierten Nachricht von zu übertragenden Bits durch eine von einem Sprach-Quellcodierer abgegebene Nachricht.

8. Vorrichtung nach Anspruch 7, **dadurch gekennzeichnet, dass** die Codewandlerschaltung eingerichtet ist, um einen in einem Blockformat verfügbaren Block (11) von zu übertragenden Bits in eine in einem Sprachübertragungsformat (260) formatierte Nachricht aus Bits (16) umzuwandeln, wobei das Blockformat eine kleinere Zahl (64) von Bits als die Bitzahl des Sprachübertragungsformats umfasst.

9. Vorrichtung nach Anspruch 7 oder 8, **dadurch gekennzeichnet, dass** sie in der Codewandlerschaltung eine Codewandeltabelle (21-24) umfasst.

10. Vorrichtung nach einem beliebigen der Ansprüche 1 bis 9, **dadurch gekennzeichnet, dass** die Codewandlerschaltung eine Verkettungsschaltung (28) zum Verketten der Bits des zu übertragenden Blocks (27) mit festen Werten zum Bilden der im Sprachübertragungsformat formatierten Nachricht von Bits umfasst.

11. Vorrichtung nach einem der Ansprüche 7 bis 10, **dadurch gekennzeichnet, dass** sie im Empfang eine Sprächformat-Anpassungsschaltung (9) in Reihe mit einer entgegengesetzten (T⁻¹) Codewandlerschaltung (29) umfasst.

## Claims

1. A method of transmitting data between two telecommunication terminals on a speech channel, in particular a mobile telephone channel, via a telecommunication network comprising speech signal transcoders known as "TRAU", the speech signals exchanged between said terminals being encoded and decoded in each terminal in accordance with a predetermined speech encoding scheme, **characterized in that**:
- configurations of binary streams that correspond to robust configurations compatible with the transcoders TRAU of the telecommunication network are identified in this speech encoding scheme,
- the data to be transmitted is transcoded into data with the speech transmission format, retaining only said robust configurations (26, 27) therefrom,
- the transcoded data is transmitted (4, 5) over a network, in particular a mobile telephone network, and
- the transcoded data is correspondingly decoded (29) at the receiver.

2. A method according to claim 1, **characterized in that**:
- the bit rate and/or mobile telephone transmission format are adapted (7) to a bit rate and/or a switched network telephone transmission format, and after transmission over the switch network:
- for decoding, the bit rate or the format is inversely adapted (9), and
- inverse transcoding (29) is effected.

3. A method according to claim 1 or claim 2, **characterized in that** transcoding is effected by allocating to a data message (16) transmitted with a mobile telephone format bits (27) whose value is determined according to their place in the transmitted message.

4. A method according to any of claims 1 to 3, **characterized in that** the speech encoding is source encoding and includes, for the speech uttered, fundamental frequency encoding, filter encoding, and excitation encoding.

5. A method according to any of claims 1 to 4, **characterized in that** a transcoding table is used for transcoding.

6. A method according to any of claims 1 to 5, **characterized in that**, for transcoding, data bits (12-15) to be transmitted are concatenated with bits (27) having imposed values to produce a message to be transmitted having a source encoder output format (17-20) which includes a different number (260) of bits than a format (64) of the bits of the data to be transmitted.

7. A device for transmitting data between two telecommunication terminals on a speech channel, in particular a mobile telephone channel, via a telecommunication network comprising speech signals transcoders, **characterized in that** it includes:
- a transcoder (10) for transcoding the data to be transmitted into data with the speech transmission format, retaining only robust configurations (26, 27) of the speech encoding scheme which are compatible with the transcoders TRAU of the telecommunication network, and
- a switch for substituting, in the transmission, the message of bits to be transmitted formatted with a speech transmission format for a message delivered by a speech source encoder.

8. A device according to claim 7, **characterized in that** the transcoder is adapted to transcode a block (11) of bits to be transmitted available with a block format into a message of bits (16) formatted with a speech transmission format (260), the block format including a number of bits (64) less than the number of bits of the speech transmission format.

9. A device according to claim 7 or claim 8, **characterized in that** the transcoder includes a table (21-24).

10. A device according to any of claims 7 to 9, **characterized in that** the transcoder includes a circuit (28) for concatenating bits of the block of bits to be transmitted with bits (27) of fixed value to form the message of bits formatted with the speech transmission format.

11. A device according to any of claims 7 to 10, **characterized in that** it includes, at the receiving end, a circuit (9) for adapting the speech format in cascade with an inverse (T⁻¹) transcoder (29).
